Europäisches Patentamt

European Patent Office

Office européen des brevets

(19)

(11) Publication number: **0 214 344**
**B1**

(12) **EUROPEAN PATENT SPECIFICATION**

(45) Date of publication of the patent specification:
**24.05.89**

(51) Int. Cl.⁴: **B60J 7/05**

(21) Application number: **85201402.6**

(22) Date of filing: **05.09.85**

(54) Open roof construction for a vehicle.

<table>
<tr><td>(43) Date of publication of application:<br><b>18.03.87 Bulletin 87/12</b></td><td>(73) Proprietor: <b>Vermeulen-Hollandia Octrooien II B.V.,<br>Küppersweg 9-11, NL-2031 EA Haarlem(NL)</b></td></tr>
<tr><td>(45) Publication of the grant of the patent:<br><b>24.05.89 Bulletin 89/21</b></td><td>(72) Inventor: <b>Boots, Robert Theodoor, Saeftinge 97,<br>NL-2036 GZ Haarlem(NL)</b></td></tr>
<tr><td>(84) Designated Contracting States:<br><b>DE FR GB IT NL SE</b></td><td>(74) Representative: <b>de Vries, Johannes Hendrik Fokke et al,<br>Octrooibureau Los en Stigter B.V. P.O. Box 20052,<br>NL-1000 HB Amsterdam(NL)</b></td></tr>
<tr><td>(56) References cited:<br><b>EP-A- 0 113 551</b><br><br><b>The file contains technical information submitted after<br>the application was filed and not included in this<br>specification</b></td><td></td></tr>
</table>

ACTORUM AG

## Description

The invention relates to a pivoting and/or sliding roof panel assembly for a motor vehicle comprising a rigid roof panel which is supported at each side by front and rear guide means on respective guide tracks extending along each side of an opening in the vehicle roof and behind said opening below the vehicle roof, the front guide means being adapted to permit pivotal movement of the panel about a horizontal axis at right angles to the guide tracks from a closed position to an inclined venting position and/or to a downwardly displaced position for the sliding movement, each rear guide means comprising a rear guide shoe arranged to be driven along the corresponding guide track and connected to the roof panel by a lifter means, each of the lifter means being arranged to permit relative angular movement of the roof panel between its closed position and its inclined venting position and/or between its closed position and its downwardly displaced position, the front guide means being adapted to adjust the height of the front side of the panel when the panel is moved from its closed position.

In a known embodiment of such a roof panel assembly (see NL-A 8 301 608 corresponding to GB-A 2 140 500) the front and rear guide means are constructed as a single rigid slide plate which extends far forwardly.

However, this known roof panel assembly has the disadvantage that the slide plate occupies a lot of space at the front side of the roof panel assembly if the slide plate produces a great forward displacement.

It is an object of the present invention to provide pivoting and/or sliding roof panel assembly, in which the above mentioned disadvantage is removed in an efficient way.

For this purpose the roof panel assembly according to the invention is characterized in that the front guide means is displaceably in engagement with both the rear guide means and the guide track by means of a reduction mechanism connecting the rear guide means with the guide track through the front guide means, the reduction mechanism being driven by a relative sliding movement between the rear guide means and the front guide means thereby forcing the front guide means to move with respect to the guide track with a reduced speed determined by the reduction ratio of the reduction mechanism.

In this way the rear guide means adjusts the front guide means, wherein a displacement of the rear guide means results in a smaller displacement of the front guide means, so that it requires less space at the front side of the roof panel assembly.

The invention will hereafter be elucidated with reference to the drawings, which show an embodiment of the roof panel assembly according to the invention by way of example.

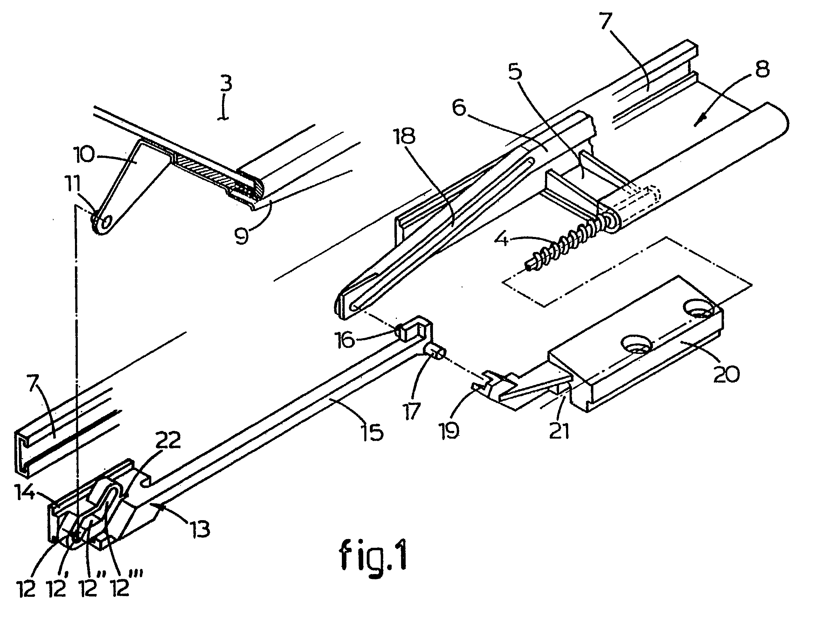

Fig. 1 is a schematic, perspective view of a portion of an embodiment of the roof panel assembly according to the invention, wherein several parts are shown separately from each other.

Fig. 2 is a schematic side view of the portion of the roof panel assembly of fig. 1 in the downwardly moved position of the panel.

Fig. 3 is a schematic side view corresponding with fig. 2, wherein, however, the panel is shown in its closed position.

Fig. 4 is a schematic side view corresponding with fig. 2 and 3, and shows the panel in its venting position.

The drawings show by way of example an embodiment of a pivoting and sliding roof panel assembly for a motor vehicle, which is provided with an opening 1 in the fixed roof 2.

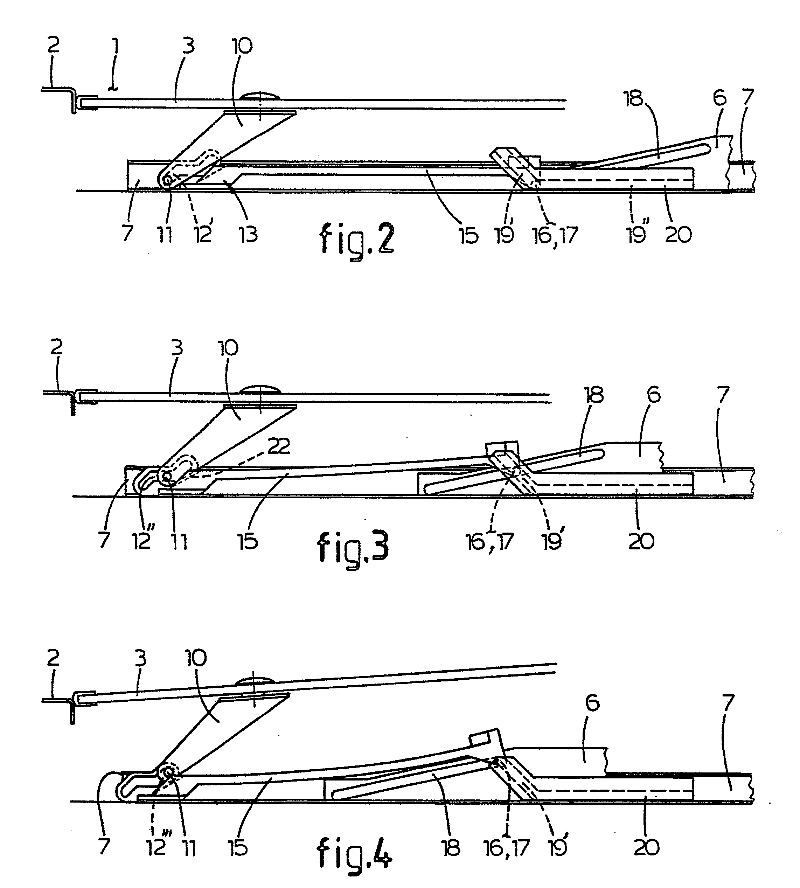

This roof panel assembly comprises a panel 3, which can be moved from its closed position in the roof opening 1 (fig. 3) into a downwardly moved position (fig. 2), in which the panel 3 can be slid backwardly under the fixed roof 2 to a wholly or partly opened position and can be moved forwardly again to the closed position (fig. 3).

The panel 3 can further be moved from its closed position to a backwardly and upwardly inclined venting position (fig. 4) and from this position may be moved back again to the closed position (fig. 3).

For displacing the panel 3 a cable-like push-pull means 4 has been provided at least at one side but in general at either side of the open roof construction, which push-pull means 4 can be displaced by an actuating member (not illustrated) in the longitudinal direction of the vehicle and engages a bracket 5 on a rear guide means 6 that is guided in a substantially horizontal rail 7 which forms a part of a stationary guide track 8.

In general at either side of the vehicle such stationary guide track 8 has been arranged, each guide guiding a rear guide means 6 disposed at the respective side of the vehicle, while each rear guide means can be moved by its own cable-like push-pull means 4 in its stationary guide track 8 and both push-pull means can be commonly displaced.

In the embodiment represented in the drawings always only one rear guide means 6 and the stationary guide track 8 disposed at one side of the vehicle as well as the elements co-operating therewith and hereinafter further described have been shown it being understood that in general at the other side of the vehicle similar elements have been used which constitute the mirror image of the elements represented in the drawings.

At a distance behind the front side of the panel 3 and the rear guide means 6 are connected with each other by means of a panel lifter means known per se, for instance from the copending European patent application EP-A 0 215 158, filed on September 5th, 1985 and published on March 25th, 1987 which therefore is not shown and will not be elucidated.

At the lower side of the panel 3 a section 9 is mounted which is provided with a bracket 10 near the front side of the panel 3. The lower free end of this bracket 10 carries a transverse pivot pin 11, which pivotably and slidably engages a guide slot 12 of a front guide means 13.

The guide slot 12 has a stepped configuration and includes a backwardly and upwardly inclined front portion 12', a substantially horizontal part 12" joining the front side thereof, and a backwardly and upwardly inclined rear portion 12''' joining the rear side of the horizontal part.

In the position of the panel 3 between the closed position and the venting position the bracket 10 is guided near its lower side in a groove 22 in the support means 13, whereby in these positions the pivot pin 11 on the bracket 10 is additionally locked in the transverse direction.

A guide section 14 formed on the front guide means 13 is guided in the horizontal rail 7 of the stationary guide track 8 just like the rear guide means 6.

The front guide means 13 has a flexible arm 15 extending in the backward direction, the flexible arm 15 carrying near its rear side two substantially horizontal transverse pins 16, 17 respectively, which are aligned with each other but extend in opposite directions.

The transverse pin 16 slidably and pivotably engages a backwardly and upwardly inclined slot 18, which is formed in the front portion of the rear guide means 6.

The opposite transverse pin 17 co-operates with a slot 19 in a guide block 20 fixed to the stationary guide track 8.

The slot 19 includes a forwardly and upwardly inclined front portion 19' and a substantially horizontal portion 19" joining the rear side therof, the rear end of the horizontal portion 19" being open.

Said transverse pins 16, 17 on the front guide means 13 together with the slots 18, 19 in the rear guide means 6 and stationary guide track 8 respectively constitute a reduction mechanism for the front guide means 13.

The guide block 20 is provided with a passage 21 for passing the cable-like push-pull means 4 therethrough.

Fig. 2 illustrates the downwardly moved position of the panel 3, in which position a panel 3 can be slid backwardly under the fixed roof 2 to a wholly or partly opened position and may be moved back again to the closed position.

When the panel is moved with the panel 3 near its foremost position the transverse pin 17 passes through the substantially horizontal portion 19" of the slot 19 in the guide block 20 of the stationary guide track 8. The transverse pin 17 can enter or leave the slot 19 through the open rear end of the slot portion 19'.

In the foremost position of the panel 3 according to fig. 2 the transverse pin 17 is at the transition of the substantially horizontal slot portion 19" and the forwardly and upwardly inclined slot portion 19'.

The transverse pin 16, which is in alignment with the transverse pin 17, is then situated at the foremost end of the backwardly and upwardly inclined slot 18. In case the transverse pin 17 is in the substantially horizontal slot portion 19" the transverse pin 17 and thereby the front guide means 13 is locked with respect to the rear guide means 6 in consequence of the relative inclinations of the slots 18 and 19", when the rear guide means 6 is displaced, said displacement being after all parallel to the slot postion 19".

In the position of fig. 2, the pivot pin 11 on the bracket 10 of the panel 3 is in engagement with the front side of the backwardly and upwardly inclined front portion 12' of the guide slot 12. The front side of the panel 3 is then in its lower position.

In fig. 3 the panel 3 is shown in the closed position, wherein the rear guide means 6 is forwardly moved from the position of fig. 2 by means of the cable-like push-pull means 4. It is obvious that this displacement is comparatively large.

Furthermore it can be seen that the positions of the transverse pins 16, 17 respectively of the front guide means 13 are changed with respect to the slots 18, 19 respectively.

These positions are determined by the relative positions of the slots 18, 19 with respect to each other. When the rear guide means is moved forward from the position of fig. 2 the transverse pin 17 cannot be moved forther forwardly, because the slot portion 19' extends upwardly. As a cause of the relative movement of the slot 18 with respect to the crossing slot portion 19' the transverse pin 16 can move backwardly and upwardly in the slot 18, while the transverse pin 17 slides forwardly and upwardly in the slot portion 19' The transverse pins 16, 17 are therefore always situated at the crossing point of the slots 18, 19.

During said forward movement of the rear guide means 6 from the position of fig. 2 the front guide means 13 has been moved with respect to the stationary guide track 8 along a small distance, corresponding with the horizontal component of the displacement of the transverse pin 17 in the slot portion 19'. As a consequence thereof the pivot pin 11 passes through the backwardly and upwardly inclined guide slot portion 12', so that the front side of the panel 3 moves upwardly.

In the position of fig. 3 the pivot pin 11 has reached the substantially horizontal guide slot portion 12", whereby a horizontal free movement of the front guide means 13 is possible without a change in the position of the panel 3.

Fig. 4 shows the panel 3 in its maximum backwardly and upwardly inclined venting position, wherein the rear guide means 6 has reached its foremost position. In this position the transverse pin 16 on the front guide means 13 is in engagement with the rearmost end of the slot 18, while the transverse pin 17 is situated in its foremost position in the slot portion 19'.

The pivot pin 11 on the bracket 10 of the panel 3 has completely passed through the portion 12''' of the guide slot 12 and has reached its upper position. The upward displacement of the pivot pin 11 compensates the downward pivot movement of the portion of the panel 3 extending in front of the bracket 10, which pivoting movement appears when the panel 3 is brought to its venting position. Hereby the foremost end of the panel 3 remains substantially in the same height as the fixed roof 2, so that the airstream is not disturbed when the vehicle is driven.

**Claims**

1. Pivoting and/or sliding roof panel assembly for a motor vehicle comprising a rigid roof panel (3) which is supported at each side by front (13) and rear (5, 6) guide means on respective guide tracks (7, 8) extending along each side of an opening in the vehicle roof and behind said opening below the vehicle roof, the front guide means (13) being adapted to permit pivotal movement of the panel (3) about a horizontal axis at right angles to the guide tracks from a closed position to an inclined venting position and/or to a downwardly displaced position for the sliding movement, each rear guide means comprising a rear guide shoe (5, 6) arranged to be driven along the corresponding guide track (7, 8) and connected to the roof panel (3) by a lifter means, each of the lifter means being arranged to permit relative angular movement of the roof panel (3) between its closed position and its inclined venting position and/or between its closed position and its downwardly displaced position, the front guide means (13) being adapted to adjust the height of the front side panel (3) when the panel (3) is moved from its closed position, characterized in that the front guide means (13) is displaceably in engagement with both the rear guide means (5, 6) and the guide track (7, 8, 29) by means of a reduction mechanism (16–19) connecting the rear guide means (5, 6) with the guide track (7, 8, 20) through the front guide means (13), the reduction mechanism (16–19) being driven by a relative sliding movement between the rear guide means (5, 6) and the front guide means (13) thereby forcing the front guide means (13) to move with respect to the guide track (7, 8, 20) with a reduced speed determined by the reduction ratio of the reduction mechanism (16–19).

2. Panel assembly according to claim 1, characterized in that the reduction mechanism comprises pin-slot connections (16, 18; 17, 19) between the front guide means (13) and both the rear guide means (5, 6) and the guide track (7, 8, 20), the pin-slot connections including slots provided on the rear guide means (5, 6) and the guide track (7, 8, 20) respectively which are so disposed with respect to each other and to the pin-slot connections (16–18; 17–19) that they control the reduced speed an displacement of the front guide means (13) along the guide track (7, 8, 20) when the rear guide means (5, 6) is displaced forwardly or backwardly.

3. Panel assembly according to claim 2, characterized in that the slots (18, 19) cross each other.

4. Panel assembly according to claim 2 or 3, characterized in that the front guide means (13) carries two horizontal transverse pins (16, 17) extending in opposite directions, the first transverse pin (16) engaging the first slot (18) in the rear guide means (5, 6), the second transverse pin (17) co-operating with a second slot (19) in the guide track (7, 8, 20).

5. Panel assembly according to claim 4, characterized in that the first and second transverse pins (16, 17) are in alignment with each other.

6. Panel assembly according to claim 5, characterized in that the first and second transverse pins (16, 17) are provided near the rear end of a rearwardly extending arm (15) of the front guide means (13).

7. Panel assembly according to one of the claims 4–6, characterized in that the first slot (18) in the rear guide means (5, 6) inclines backwardly and upwardly, while the second slot (19) in the guide track (7, 8, 20) inclines at least partially forwardly and upwardly.

8. Panel assembly according to claim 7, wherein the panel (3) is movable downwardly from the closed position to a position, wherein the panel (3) is slidable to a wholly or partially opened position, and vice versa, characterized in that the second slot (19) comprised a substantially horizontal portion (19"), which joins the rear end of the forwardly and upwardly inclined portion (19') at its front end.

9. Panel assembly according to one of the preceding claims, characterized in that the panel (3) is provided with a pivot (11) pin near its front side, the pivot pin (11) engaging a closed guide slot (12) in the support means.

10. Panel assembly according to claim 8 and 9, wherein the panel (3) can be moved from the closed position to a rearwardly and upwardly inclined venting position, and vice versa, characerized in that the guide slot (12) in the front guide means (13) includes a forwardly and downwardly inclined front portion (12'), substantially horizontal portion (12") joining to the rear end thereof and a backwardly and upwardly inclined rear portion (12''') joining to the rear end of the horizontal portion (12").

11. Panel assembly according to one of the claims 4–10, characterized in that the second slot (19) is formed in a guide block (20) of the guide track (7, 8, 20).

12. Panel assembly according to one of the claims 4–11, wherein the rear guide means (5, 6) comprises a slide plate (6), characterized in that the first slot (18) is formed in the front portion of the slide plate (6).

13. Panel assembly according to one of the preceding claims, characterized in that the front guide means (13) is slidably guided in the substantially horizontal rail (7) of the guide track (7, 8, 29).

14. Panel assembly according to one of the preceding claims, wherein the panel (3) carries a bracket (10) near its front side, the bracket (10) being supported on the front guide means (13), characterized in that the front guide means (13) is provided with a groove (22), in which the lower side of the bracket (10) is guided.

**Patentansprüche**

1. Kraftfahrzeugschiebedachkonstruktion zum Schwenken und/oder Verschieben, mit einem steifen Schiebedach (3), welches auf jeder Seite durch vordere (13) und hinter (5, 6) Führungsmittel abgestützt ist, welche sich jeweils auf Führungschienen (7, 8) befinden, die sich entlang der Seiten einer Öffnung im Fahrzeugdach und hinter der Öffnung unterhalb des Fahrzeugdachs erstrecken, wobei das vordere Führungsmittel (13) geeignet ist, eine Schwenkbewegung des Schiebedachs (3) um eine horizontal und im rechten Winkel zu den Führungsschienen liegende Achse aus einer Schließstellung in eine geneigte Belüftungsstellung und/oder in eine nach unten versetzte Stellung für die Schiebebewegung zuzulassen, wobei jedes hintere Führungsmittel einen hinteren Führungsschlitten (5, 6) aufweist, welcher entlang der entsprechenden Führungsschiene (7, 8) verschiebbar ist und mit dem Schiebedach (3) über ein Anhebemittel verbunden ist, wobei jedes der Anhebemittel derart gestaltet ist, daß eine relative Winkelbewegung des Schiebedachs (3) zwischen dessen Schließstellung und geneigten Belüftungsstellung und/oder zwischen seiner Schließstellung und seiner nach unten versetzten Stellung möglich ist, wobei das vordere Führungsmittel (13) so gestaltet ist, daß die Höhe der Vorderseite des Schiebedachs (3) sich einreguliert, wenn das Schiebedach (3) aus seiner Schließstellung herausbewegt wird, dadurch gekennzeichnet, daß das vordere Führungsmittel (13) verlagerbar sowohl mit dem hinteren Führungsmittel (5, 6) als auch den Führungsschienen (7, 8, 20) mittels eines Untersetzungsmechanismus (16 bis 19) im Eingriff steht, welcher das hintere Führungsmittel (5, 6) über das vordere Führungsmittel (13) mit den Führungsschienen (7, 8, 20) verbindet, wobei der Untersetzungsmechanismus (16 bis 19) durch eine Relativgleitbewegung zwischen dem hinteren Führungsmittel (5, 6) und dem vorderen Führungsmittel (13) angetrieben wird und dadurch das vordere Führungsmittel (13) zwingt, sich relativ zu den Führungsschienen (7, 8, 20) mit verringerter Geschwindigkeit zu bewegen, welche von dem Untersetzungsverhältnis des Untersetzungsmechanismus (16 bis 19) abhängt.

2. Schiebedachkonstruktion nach Anspruch 1, dadurch gekennzeichnet, daß der Untersetzungsmechanismus Bolzen-Schlitz-Verbindungen (16, 18; 17, 19) zwischen dem vorderen Führungsmittel (13) und sowohl dem hinteren Führungsmittel (5, 6) als auch den Führungsschienen (7, 8, 20) aufweist, wobei die Bolzen-Schlitz-Verbindungen mit Schlitzen in dem hinteren Führungsmittel (5, 6) bzw. in der Führungsschiene (7, 8, 20) versehen sind, wobei die Schlitze so im Verhältnis zueinander und zu den Bolzen-Schlitz-Verbindungen (16 bis 18; 17 bis 19) angeordnet sind, daß sie die verringerte Geschwindigkeit und das Verlagern des vorderen Führungsmittels (13) entlang der Führungsschiene (7, 8, 20) steuern, wenn das hintere Führungsmittel (5, 6) vorwärts oder rückwärts verlagert wird.

3. Schiebedachkonstruktion nach Anspruch 2, dadurch gekennzeichnet, daß die Schlitze (18, 19) einander überkreuzen.

4. Schiebedachkonstruktion nach Anspruch 2 oder 3, dadurch gekennzeichnet, daß das vordere Führungsmittel (13) zwei horizontal und sich in entgegengesetzter Richtung erstreckende Querbolzen (16, 17) trägt, wobei der erste Querbolzen (16) in den ersten Schlitz (18) des hinteren Führungsmittels (5, 6) eingreift und der zweite Querbolzen (17) mit einem in der Führungsschiene (7, 8, 20) ausgebildeten zweiten Schlitz (19) zusammenwirkt.

5. Schiebedachkonstruktion nach Anspruch 4, dadurch gekennzeichnet, daß der erste und der zweite Querbolzen (16, 17) aufeinander ausgerichtet sind.

6. Schiebedachkonstruktion nach Anspruch 5, dadurch gekennzeichnet, daß der erste und der zweite Querbolzen (16, 17) sich in der Nähe des hinteren Endes eines sich nach hinten erstreckenden Armes (15) des vorderen Führungsmittels (13) befinden.

7. Schiebedachkonstruktion nach einem der Ansprüche 4 bis 6, dadurch gekennzeichnet, daß der in dem hinteren Führungsmittel (5, 6) befindliche erste Schlitz (18) nach hinten und aufwärts geneigt ist, während der in der Führungsschiene (7, 8, 20) ausgebildete zweite Schlitz (19) zumindest abschnittsweise nach vorne und aufwärts geneigt ist.

8. Schiebedachkonstruktion nach Anspruch 7, wobei das Schiebedach (3) aus einer Schließstellung heraus nach unten in eine Position bewegbar ist, in welcher das Schiebedach (3) in eine ganz oder teilweise geöffnete Stellung und umgekehrt verschiebbar ist, dadurch gekennzeichnet, daß der zweite Schlitz (19) einen im wesentlichen horizontalen Abschnitt (19") aufweist, welcher sich an das hintere Ende des nach vorne und aufwärts geneigten Abschnitts (19') anschließt.

9. Schiebedachkonstruktion nach einem der vorangehenden Ansprüche, dadurch gekennzeichnet, daß das Schiebedach (3) in der Nähe seiner Vorderseite mit einem Schwenkbolzen (11) versehen ist, der in einen in dem Stützmittel ausgebildeten geschlossenen Führungsschlitz (12) eingreift.

10. Schiebedachkonstruktion nach Anspruch 8 und 9, wobei das Schiebedach (3) aus seiner Schließstellung heraus in eine hintere und nach oben geneigte Belüftungsstellung und umgekehrt bewegt werden kann, dadurch gekennzeichnet, daß der in dem vorderen Führungsmittel (13) ausgebildete Führungsschlitz (12) einen nach vorne und abwärts geneigten Frontabschnitt (12'), einen sich an dessen hinteres Ende anschließenden und im wesentlichen horizontalen Abschnitt (12"), und einen sich an dessen hinteres Ende anschließenden, nach hinten und aufwärts geneigten hinteren Abschnitt (12"') aufweist.

11. Schiebedachkonstruktion nach einem der Ansprüche 4 bis 10, dadurch gekennzeichnet, daß der zweite Schlitz (19) in einem Führungsblock (20) der Führungsschiene (7, 8, 20) ausgebildet ist.

12. Schiebedachkonstruktion nach einem der Ansprüche 4 bis 11, bei welcher das hintere Führungsmittel (5, 6) eine Gleitplatte (6) aufweist, dadurch gekennzeichnet, daß der erste Schlitz (18) im Vorderteil der Gleitplatte (6) ausgebildet ist.

13. Schiebedachkonstruktion nach einem der vorangehenden Ansprüche, dadurch gekennzeichnet, daß das vordere Führungsmittel (13) in der im wesentlichen horizontalen Schiene (7) der Führungsschiene (7, 8, 20) verschiebbar ist.

14. Schiebedachkonstruktion nach einem der vorangehenden Ansprüche, wobei das Schiebedach (3) in der Nähe seiner Vorderseite einen Ausleger (10) trägt, der von dem vorderen Führungsmittel (13) abgestützt wird, dadurch gekennzeichnet, daß das vordere Führungsmittel (13) mit einer Nut (22) versehen ist, in welcher der Ausleger an dessen Unterseite geführt ist.

## Revendications

1. Ensemble de panneau de toit pivotant et/ou coulissant pour un véhicule à moteur, comprenant un panneau de toit rigide (3) qui est supporté de chaque côté par des moyens de guidage avant (13) et arrière (5, 6) sur des chemins respectifs (7, 8) de guidage s'étendant le long de chaque côté d'une ouverture ménagée dans le toit du véhicule et en arrière de ladite ouverture au-dessous du toit du véhicule, les moyens de guidage avant (13) étant conçus pour permettre un mouvement de pivotement du panneau (3) autour d'un axe horizontal perpendiculaire aux chemins de guidage, d'une position fermée à une position inclinée de ventilation et/ou à une position décalée vers le bas pour le mouvement de coulissement, chaque moyen de guidage arrière comprenant un patin de guidage arrière (5, 6) agencé de façon à être entraîné le long du chemin de guidage correspondant (7, 8) et relié au panneau de toit (3) par des moyens d'élévation, chacun des moyens d'élévation étant agencé pour permettre un mouvement angulaire relatif du panneau de toit (3) entre sa position fermée et sa position inclinée de ventilation et/ou entre sa position fermée et sa position décalée vers le bas, les moyens de guidage avant (13) étant conçus pour régler la hauteur du côté avant du panneau (3) lorsque le panneau (3) est déplacé à partir de sa position fermée, caractérisé en ce que les moyens de guidage avant (13) sont enclenchés de façon mobile avec à la fois les moyens de guidage arrière (5, 6) et les chemins de guidage (7, 8, 20) au moyen d'un mécanisme de réduction (16–19) reliant les moyens de guidage arrière (5, 6) aux chemins de guidage (7, 8, 20) par l'intermédiaire des moyens de guidage avant (13), le mécanisme (16–19) de réduction étant entraîné par un mouvement relatif de coulissement entre les moyens de guidage arrière (5, 6) et les moyens de guidage avant (13) afin d'obliger les moyens de guidage avant (13) à se déplacer par rapport aux chemins de guidage (7, 8, 20) à une vitesse réduite déterminée par le rapport de réduction du mécanisme (16–19) de réduction.

2. Ensemble de panneau selon la revendication 1, caractérisé en ce que le mécanisme de réduction comprend des articulations tenon-mortaise (16, 18; 17, 19) entre les moyens de guidage avant (13) et à la fois les moyens de guidage arrière (5, 6) et les chemins de guidage (7, 8, 20), les articulations tenon-mortaise comprenant des mortaises ménagées dans les moyens de guidage arrière (5, 6) et les chemins de guidage (7, 8, 20), respectivement, qui sont disposées l'une par rapport à l'autre et par rapport aux articulations tenon-mortaise (16–18; 17–19) de manière qu'elles commandent la vitesse réduite et le déplacement des moyens de guidage avant (13) le long du chemin de guidage (7, 8, 20) lorsque les moyens de guidage arrière (5, 6) sont déplacés vers l'avant ou vers l'arrière.

3. Ensemble de panneau selon la revendication 2, caractérisé en ce que les mortaises (18, 19) se croisent.

4. Ensemble de panneau selon la revendication 2 ou 3, caractérisé en ce que les moyens de guidage avant (13) portent deux tenons transversaux horizontaux (16, 17) s'étendant dans des directions opposées, le premier tenon transversal (18) s'engageant dans la première mortaise (18) des moyens de guidage arrière (5, 6), le second tenon transversal (17) coopérant avec une seconde mortaise (19) située dans le chemin de guidage (7, 8, 20).

5. Ensemble de tenon selon la revendication 4, caractérisé en ce que les premier et second tenons transversaux (16, 17) sont en alignement l'un avec l'autre.

6. Ensemble de panneau selon la revendication 5, caractérisé en ce que les premier et second tenons transversaux (16, 17) sont prévus à proximité de l'extrémité arrière d'un bras (15) s'étendant vers l'arrière des moyens de guidage avant (13).

7. Ensemble de panneau selon l'une des revendications 4–6, caractérisé en ce que la première mortaise (18) située dans les moyens de guidage arrière (5, 6) est inclinée vers l'arrière et vers le haut, tandis que la seconde mortaise (19) située dans le chemin de guidage (7, 8, 20) est inclinée au moins partiellement vers l'avant et vers le haut.

8. Ensemble de panneau selon la revendication 7, dans lequel le panneau (3) peut être déplacé vers le bas à partir de la position fermée jusqu'à une position dans laquelle le panneau (3) peut coulisser vers une position totalement ou partiellement ouverte, et vice versa, caractérisé en ce que la seconde mortaise (19) comprend un tronçon sensiblement horizontal (19") qui rejoint à son extrémité avant l'extrémité arrière du tronçon (19') incliné vers l'avant et vers le haut.

9. Ensemble de panneau selon l'une des revendications précédentes, caractérisé en ce que le panneau (3) est munis d'un axe de pivotement (11) à proximité de son côté avant, le pivot (11) étant engagé dans une rainure fermée (12) de guidage ménagée dans les moyens de support.

10. Ensemble de panneau selon les revendications 8 et 9, dans lequel le panneau (3) peut être déplacé de la position fermée vers une position de ventilation, inclinée vers l'arrière et vers le haut, et vice versa, caractérisé en ce que la rainure de guidage (12) ménagée dans les moyens de guidage avant (13) comprend un tronçon avant (12') incliné vers l'avant et vers le bas, un tronçon sensiblement horizontal (12") joint à son extrémité arrière et un tronçon arrière (12''') incliné vers l'arrière et vers le haut, joint à l'extrémité arrière du tronçon horizontal (12").

11. Ensemble de panneau selon l'une des revendications 4–10, caractérisé en ce que la seconde mortaise (19) est formée dans un bloc (20) de guidage du chemin (7, 8, 20) de guidage.

12. Ensemble de panneau selon l'une des revendications 4–11, dans lequel les moyens de guidage arrière (5, 6) comprennent une plaque coulissante (6), caractérisé en ce que la première mortaise (18) est formée dans la partie avant de la plaque coulissante (6).

13. Ensemble de panneau selon l'une des revendications précédentes, caractérisé en ce que les moyens de guidage avant (13) sont guidés de façon coulissante dans le rail sensiblement horizontal (7) du chemin (7, 8, 20) de guidage.

14. Ensemble de panneau selon l'une des revendications précédentes, dans lequel le panneau (3) porte une équerre (10) à proximité de son côté avant, l'équerre (10) étant supportée sur les moyens de guidage avant (13), caractérisé en ce que les moyens de guidage avant (13) présentent une gorge (22) dans laquelle le côté inférieur de l'équerre (10) est guidé.

fig.1

EP 0 214 344 B1

fig.2

fig.3

fig.4